# EUROPEAN PATENT SPECIFICATION

(11) **EP 3 922 427 B1**
(45) Date of publication and mention of the grant of the patent: **13.09.2023**
(21) Application number: 20753000.7
(22) Date of filing: 05.02.2020
(51) Int. Cl.: B29B 7/42, B29B 7/90, B29B 9/06, B29B 9/12, B29B 9/14, B29C 45/00, B29C 48/00, B29C 48/04, B29C 48/05, B29C 48/30, B29B 7/82, B29K 105/26, B29K 23/00

(54) **MOLDING MACHINE, AND METHOD FOR MANUFACTURING A MOLDED ARTICLE OF THERMOPLASTIC RESIN COMPOSITION**
FORMMASCHINE, UND VERFAHREN ZUR HERSTELLUNG EINES GEFORMTEN GEGENSTANDES AUS EINER THERMOPLASTISCHEN HARZZUSAMMENSETZUNG
MACHINE DE MOULAGE, ET PROCÉDÉ DE FABRICATION D'UN ARTICLE MOULÉ DE COMPOSITION DE RÉSINE THERMOPLASTIQUE

(30) Priority: 08.02.2019 JP 2019021401
(43) Date of publication of application: 15.12.2021
(73) Proprietor: Fukuoka University, Fukuoka 814-0180 (JP)
(72) Inventor: YAO, Shigeru, Fukuoka-shi, Fukuoka 814-0180 (JP); PHANTHONG, Patchiya, Fukuoka-shi, Fukuoka 814-0180 (JP); YAMASAKI, Natsumi, Fukuoka-shi, Fukuoka 814-0180 (JP); YAMASHITA, Keitaro, Fukuoka-shi, Fukuoka 814-0180 (JP); MICHIUE, Tetsuyoshi, Fukuyama-shi, Hiroshima 721-0956 (JP)
(74) Representative: Winter, Brandl - Partnerschaft mbB
(86) International application number: PCT/JP2020/004304
(87) International publication number: WO 2020/162488

(56) References cited:
- JP-A- H 081 662
- JP-A- H 081 662
- JP-A- 2002 234 999
- JP-A- 2004 059 673
- JP-A- 2004 059 673
- JP-A- 2005 516 795
- JP-A- 2017 148 997
- US-A- 6 158 999
- US-A1- 2005 127 568
- US-A1- 2011 309 172
- US-B1- 6 595 765
- US-B1- 6 644 952

## Description

### Technical Field

The present invention relates to a molding machine and a method for manufacturing a molded article of a thermoplastic resin composition.

### Background Art

In some cases, a thermoplastic resin by itself might not have properties sufficient for an application or purpose. A composite resin composition having a plurality of inorganic substances and other polymer components contained inside the system is therefore often fabricated depending on the application or purpose, thereby achieving physical property values that are suitable for the achieving the application or purpose.

While well-known that the elastic modulus and breaking strength can be set to conform to the application and purpose by taking a measure described above, the property value of the breaking extension, etc. may lower because a breakage starting point occurs due to an inorganic substance or another component polymer inside the system.

Further, resource recycling of thermoplastic resin has been progressing. The amount of plastic used as container and packaging materials in particular has also recently been tending to increase and greater plastic usage has made recycling an important problem. Different types of methods for recycling the thermoplastic resin have therefore been proposed.

Conventionally, it has been widely and commonly acknowledged that deterioration in mechanical properties of waste plastic had been caused by chemical deterioration. This chemical deterioration is a phenomenon known as molecular chain cutting that renders reproduction impossible and therefore reproducing the mechanical properties of waste plastic has been considered impossible. Further, a breakage starting point occurs due to an inorganic substance and/or other component polymer in the system and is considered the reason for the lower breaking extension. The present inventors on the other hand basically state that the cause of deterioration in the mechanical properties stems from internal structural transmutations in the polymer and simultaneously propose a new molding method allowing reproduction of physical properties (See for example Non-Patent Literatures 1 to 6, etc.). Applying this new method reveals a remarkable increase in the breaking extension even if there is inorganic foreign material derived from recycled resin or another polymer in the system (Patent Literature 2).

Patent Literature 1 relates to a resin composition molding machine for melting a thermoplastic resin composition and molding it into a pellet shape as well as a method for molding a resin composition. Patent Literature 1 discloses a resin composition molding machine, etc. including a resin reservoir part provided between a melting and kneading part and a discharge part. Patent Literature 1 also discloses as the thermoplastic resin, a crystalline polymer containing a polyolefin-based resin derived from a recycled resin.

Patent Literature 2 relates to a method for reproducing a thermoplastic resin composition containing a recycled polyolefin. Patent Literature 2 discloses a reproduction method including a rapid cooling process that quickly cools a molten resin composition which has been molded into a product shape in the melting and molding process.

Patent Literature 3 relates to a method for producing fiber-reinforced thermoplastic resin pellets by using an extruder and a die apparatus therefor.

Patent Literature 4 relates to a resin partition, which can be melt-processed and the obtained molded product can exhibit the characteristics of the filler used, and its production.

Patent Literature 5 relates to a tyre manufacturing method and to an apparatus, in particular an extruder, for producing a ribbon in elastomeric material for making at least one component of said tyre.

### Citation List

Patent Literature 1: JP 2017 - 148 997 A
Patent Literature 2: JP 2016 - 049 736 A
Patent Literature 3: JP H08 1662 A
Patent Literature 4: JP 2004 - 059 673 A
Patent Literature 5: US 2005 / 127 568 A1

Non Patent Literature 1: "Advanced recycling process for waste plastics based on physical degradation theory and its stability", Aya Tominaga, Hiroshi Sekiguchi, Ryoko Nakano, Shigeru Yao, Eiichi Takatori, Journal of Material Cycles and Waste Management, accepted.
Non Patent Literature 2: "Relationship between the long period and the mechanical properties of recycled polypropylene", Aya Tominaga, Hiroshi Sekiguchi, Ryoko Nakano, Shigeru Yao, and Eiichi Takatori, Nihon Reoroji Gakkaishi, 45(5), 287-290 (2017)
Non Patent Literature 3: "Creation of Advanced Recycle Process to Waste Container and Packaging Plastic - Polypropylene Sorted Recycle Plastic Case-", Nozomi Takenaka, Aya Tominaga, Hiroshi Sekiguchi, Ryoko Nakano, Eiichi Takatori, Shigeru Yao, Nihon Reoroji Gakkaishi, 45(3), 139-143 (2017)
Non Patent Literature 4: "Thermal Process Dependence of Mechanical Properties and Inner Structure of Pre-consumer Recycled Polypropylene", Aya Tominaga, Hiroshi Sekiguchi, Ryoko Nakano, Shigeru Yao, Eiichi Takatori, Proceedings of PPS-30, AlP Conf. Proc. 1664, 150011-1 - 150011-4, 2015
Non Patent Literature 5: "Advanced Recycling Technology of Pre-Consumer Waste Polypropylene", written by Aya Tominaga, Hiroshi Sekiguchi, Ryoko Nakano, Shigeru Yao, Eiichi Takatori, KOBUNSHI RONBUNSHU, Japanese journal of polymer science and technology, 70(12), 712-721(2013).
Non Patent Literature 6: "Inner structure and mechanical properties of recycled polypropylene.", Shigeru Yao, Aya Tominaga, Youhei Fujikawa, Hiroshi Sekiguchi, and Eiichi Takatori, Nihon Reoroji Gakkaishi (J. Soc. Rheol, Japan), 41(3), 173-178 (2013).

### Summary of Invention

### Technical Problem

Conditions for melting and kneading a composite resin composition are examined to achieve better physical properties. Use of additives has been proposed in particular for thermoplastic resin, to improve boundary adhesiveness between polymers serving as the matrix with respect to inorganic substances and other polymers. However, adding an additive to the mixture of inorganic substances and other polymers raises the cost. Moreover, the resultant physical properties might still be inadequate and further improvement is needed.

Further, the need to reproduce the mechanical properties of the waste plastic requires an examination of manufacturing methods and conditions relating to the reproduction of physical properties using actual injection molding. Though Patent Literatures 1 and 2 exhibit improvements in the physical properties at the time of molding the resin composition containing the recycled polyolefin, further improvement is still needed. Further, results from examining molding of the composite resin composition led to discovery of a molding method capable of improving the physical properties of the thermoplastic resin composition and widely applicable to thermoplastic resin compositions.

In view of the aforementioned circumstances, an object of the present invention is to provide a molding machine and a manufacturing method for improving the physical properties of thermoplastic resin composition. Another object of the present invention is to provide a method for manufacturing a composite resin composition having physical properties similar to those of a virgin resin.

### Solution to Problem

This object is solved by the subject matter of the independent claims 1 and 3; further preferred embodiments are claimed in the dependent claims.

### Advantageous Effects of Invention

The present invention is capable of improving physical properties such as the breaking extension of a thermoplastic resin composition. Further, even if there is for example an inorganic substance and/or polymer of another component, a molded article of a composite resin composition having physical properties such as a breaking extension equivalent to a virgin article of a first thermoplastic resin composition can be manufactured.

Further, by molding for example a recycled resin composition according to the present invention, a molded article of a recycled resin composition can be obtained that exhibits more excellent physical properties than the molded article of a recycled resin composition manufactured according to the conventional manufacturing method and has physical properties such as breaking extension that are close to the physical properties of a molded article of virgin resin.

### Brief Description of Drawings

Fig. 1 shows a pelletizing molding machine used for the pelletizing process of the present invention.
Fig. 2 shows an overview of the resin reservoir part of the pelletizing molding machine.
Fig. 3 is a drawing for describing the shape of the molded article for a tensile testing in the examples.
Fig. 4 is a drawing for describing the shape of the molded article for the Izod impact strength test in the examples.
Fig. 5 shows a stress - strain curve (S - S curve) of the tensile testing according to the examples.
Fig. 6 shows a stress - strain curve (S - S curve) of the tensile testing according to the examples.
Fig. 7 shows an image of a test piece after the tensile testing according to the examples.

### Description of Embodiments

The embodiments of the present invention will hereinafter be described in detail. The following description about the constituents relates to one example (representative example) of the present invention. If the expression "[...] to [...]" is used in the present specification, it is used as an expression including the numerical values before and after this expression.

### [Molding Machine of the Present Invention]

The molding machine according to the present invention is a molding machine for a thermoplastic resin composition that melts a thermoplastic resin composition containing a first thermoplastic resin and molding the thermoplastic resin composition into a strand shape, the molding machine including: a supply port for supplying the thermoplastic resin composition; a melting and kneading part for melting and kneading the thermoplastic resin composition from the supply port; a resin reservoir part for retaining the composite resin composition melted and kneaded in the melting and kneading part; and a discharge part for discharging in a strand shape the thermoplastic resin composition from the resin reservoir part, in which the resin reservoir part has a shape tapering from the melting and kneading part toward the discharge part. The tapered shape in the resin reservoir part is configured such that: a ratio (A2 to A1) of a cross-sectional area A2 of a flow path for resin in a second connection part between the resin reservoir part and the discharge part, to a cross-sectional area A1 of a flow path for resin in a first connection part between the resin reservoir part and the melting and kneading part, is 1% to 50%; and in a length L1 from the first connection part to the second connection part, with the cross-sectional area A1 as a reference, the cross-sectional area of the flow path for the resin in the resin reservoir part decreases in a range from 0.1 to 2.0%/mm.

Strands of thermoplastic resin compositions molded by the above-described molding machine are generally shredded and used as pellets. These pellets are suitable for manufacturing a molded article having more excellent physical properties such as breaking extension than in case of using pellets molded by using the conventional molding means. Further, the molded article using the pellets of the composite resin composition molded by the above-described molding machine suppresses lowering the breaking extension due to a composite of an inorganic substance and/or another polymer, and therefore has excellent mechanical properties.

### [First Manufacturing Method according to the Present Invention]

The first manufacturing method according to the present invention includes a pelletizing process for melting and pelletizing a thermoplastic resin composition containing a first thermoplastic resin, in which resin pellets are obtained by: supplying the thermoplastic resin composition to a supply port of a pellet molding machine; extruding the thermoplastic resin composition supplied through the supply port, while melting the thermoplastic resin composition in a melting and kneading part; retaining the thermoplastic resin composition melted in the melting and kneading part, in a resin reservoir part having a shape tapering in an extruding direction of the thermoplastic resin composition; discharging the thermoplastic resin composition in a strand shape retained in the resin reservoir part from a discharge part; and shredding the thermoplastic resin composition in a strand shape discharged from the discharge part. The tapered shape in the resin reservoir part is configured such that: a ratio (A2 to A1) of a cross-sectional area A2 of a flow path for resin in a second connection part between the resin reservoir part and the discharge part, to a cross-sectional area A1 of a flow path for resin in a first connection part between the resin reservoir part and the melting and kneading part, is 1% to 50%; and in a length L1 from the first connection part to the second connection part, with the cross-sectional area A1 as a reference, the cross-sectional area of the flow path for the resin in the resin reservoir part decreases in a range from 0.1 to 2.0%/mm.

The pellets of the thermoplastic resin composition molded in the above-described manufacturing method are suitable for manufacturing a molded article having physical properties such as the breaking extension that are superior to when using pellets molded by the conventional molding method. Further, the molded article using the pellets of the composite resin composition molded by the above-described manufacturing method suppress lowering the breaking extension due to an inorganic substance and/or another polymer and therefore has excellent mechanical properties.

### [Second Manufacturing Method according to the Present Invention]

The second manufacturing method according to the present invention includes: a pelletizing process for melting and molding into pellets a composite resin composition containing a first thermoplastic resin and an inorganic substance and/or a polymer component different from the first thermoplastic resin, in which resin pellets are obtained by supplying the composite resin composition to a supply port of a pellet molding machine, melting in a melting and kneading part the composite resin composition supplied from the supply port, retaining in a resin reservoir part the composite resin composition melted in the melting and kneading part, discharging from a discharging part in a strand shape the composite resin composition retained in the resin reservoir part and shredding the composite resin composition in a strand shape discharged from the discharging part; and an injection molding process for molding by an injection molding machine the resin pellets pelletized in the pelletizing process, in which the resin pellets are molded at an injection molding velocity which is lower than a standard injection molding velocity relative to pellets of virgin resin by the injection molding machine.

The molded article of the composite resin composition molded according to the above manufacturing method suppress lowering the breaking extension due to an inorganic substance and/or another polymer and therefore has excellent mechanical properties.

In the present application, a combination of the first manufacturing method and the second manufacturing method of the present invention is sometimes referred to as the manufacturing method according to the present invention. Further, in the present application, the manufacturing method according to the present invention can be implemented by using the molding machine according to the present invention and, hereinafter, the corresponding configurations can be appropriately referred to and used. The molding machine according to the present invention is especially suitable for the first manufacturing method according to the present invention.

The manufacturing method according to the present invention is also effective for a recycled resin composition. The molded article of the recycled resin composition molded according to the above-described manufacturing method exhibits more excellent physical properties than the molded article of the recycled resin composition manufactured by the conventional manufacturing method and also exhibits physical properties similar to those of the molded article of the pellets of virgin resin.

### [Molded Article according to the Present Invention]

The molded article of the recycled resin composition according to the present invention contains a polyolefin-based resin derived from recycled resin which has an extension percentage of 300% or higher. Though containing a polyolefin-based resin derived from recycled resin, this molded article has a high extension percentage which is likely to lower when using the recycled resin in particular and can be easily used for various uses. The molded article of the recycled resin composition according to the present invention can be manufactured by utilizing the manufacturing method of the present invention, and the respective aspects of the invention can be implemented by employing the corresponding configuration.

The present inventors examined molding the composite resin composition when the first thermoplastic resin contains the inorganic substance and/or other polymer components. As a typical example thereof, the present inventors examined the effect of molding conditions on the injection-molded article of the recycled resin composition containing the inorganic substance and/or other polymer components, thereby discovering that the mechanical properties of the molded article greatly depend on the respective conditions of pellet molding and injection molding. Conventionally, when molding the recycled resin composition, molding has often been carried out based on the same molding conditions as conditions utilizing a virgin resin composition corresponding to the resin composition component. However, the molded article of the recycled resin composition molded under these molding conditions has lower mechanical properties compared with mechanical properties utilizing the virgin resin composition.

As for the molding conditions using the composite resin composition, when fabricating pellets by using a pellet molding machine (pelletizer) with a resin reservoir part, the present inventors examined whether the resin reservoir part has a tapered shape. According to conventional pellet molding, a cross-sectional area in the extruding direction rapidly changes between the melting and kneading part to the discharge part and therefore large shear deformation is thought to occur in the resin. When the resin reservoir part is provided on the part where large shear deformation occurs, the shear in the melting and kneading part can be compensated to a fixed extent. Moreover, when the cross-sectional area in the extruding direction rapidly changes near the discharge part from the straight-pipe-type resin reservoir part, the present inventors considered that this change in the cross-sectional area is also the cause of shear deformation in the resin. The present inventors therefore also examined the configuration of the resin reservoir part, tapering from the melting and kneading part toward the discharge part, thereby suppressing the rapid shear deformation and achieving a gentle shear deformation. As a result, they found out that a molded article could be obtained having more excellent physical properties.

The present inventors also found out that the above configuration could be applied not only to the composite resin composition but also to a thermoplastic resin composition. In some cases, the strain due to excessive shearing also occurs in the thermoplastic resin composition at the time of extrusion from a biaxial kneader during processes such as pelletization, and with that strain still remaining during pelletization and the molding, the physical properties lower due to the strain. However, this strain can be eliminated by providing a resin reservoir part in the molding machine of the present invention.

In terms of molding conditions for the composite resin composition such as a recycled resin composition, the present inventors also found out that pellets made by the pellet molding machine (pelletizer) having a resin reservoir part had injection molding conditions modified to optimized molding conditions different from those for virgin resin composition, so that a molded article having more excellent physical properties could be obtained. The present inventors also found out that with the above injection molding conditions intended particularly for a recycled resin composition, lowering the injection molding velocity proved effective in comparison with those for the virgin resin composition.

The above is possible because use of the pelletizer having the resin reservoir part enables resolving the internal structural transmutations caused in the matrix polymer in the composition due to shear deformation applied at the time of compounding, thus restoring transmission of force to a state where it can be carried out satisfactorily, and because molding is performed so the above state is maintained to some extent even in the step of melting at the time of the injection molding, thereby suppressing lowering the breaking extension.

### [First Thermoplastic Resin]

The present invention relates to a thermoplastic resin composition including a first thermoplastic resin, etc. The first thermoplastic resin is a thermoplastic resin serving as the main component in the thermoplastic resin composition. The first thermoplastic resin is a resin which softens with heat applied thereto and can be injection-molded. The first thermoplastic resin includes for example a polyolefin-based resin, polystyrene (PS), an acrylonitrile-butadiene-styrene copolymer (ABS resin), an acrylic resin such as PMMA, polyvinyl chloride, a polyamide resin, polybutylene terephthalate (PBT), polyethylene terephthalate (PET), polycarbonate (PC), polyetheretherketone (PEEK) and polyphenylene sulfide (PPS).

Among these resins, the polyolefin-based resin is preferably used as the first thermoplastic resin. Polyolefin is a polymer such as polyethylene and polypropylene that have crystallinity obtained by polymerization of an α-olefin with a double bond in the 1-position.

### [Thermoplastic Resin Composition]

The thermoplastic resin composition contains the first thermoplastic resin. The thermoplastic resin composition may substantially include the first thermoplastic resin. The thermoplastic resin composition may also contain impurities generally contained in the thermoplastic resin composition. The thermoplastic resin composition may also contain various kinds of additives that are used by being mixed with the thermoplastic resin composition. As the additives, various kinds of physical property improving agents such as for example a coloring agent, a stabilizing agent, a UV absorbing agent and a plasticizing agent can be used. The quantity of the first thermoplastic resin contained in the thermoplastic resin composition is preferably 40 mass% or larger, more preferably 50 mass% or larger, and more preferably 60 mass% or larger. While no particular upper limit on the first thermoplastic resin contained in the thermoplastic resin composition needs to be set, the limit may be set to 99.9 mass% or smaller, 99.5 mass% or smaller, 99 mass% or smaller, 98 mass% or smaller, and 95 mass% or smaller, etc. because the thermoplastic resin may contain additives and a subtle amount of impurities.

### [Composite Resin Composition]

As the thermoplastic resin composition, a composite resin composition containing the first thermoplastic resin and an inorganic substance and/or a polymer component different from the first thermoplastic resin may be used. In conventional molding, the composite resin composition has a breaking extension that is in particular lower than the first thermoplastic resin composition. The present invention can suppress lowering the above-described breaking extension.

### [Inorganic Substance]

The composite resin composition can contain the inorganic substance. This inorganic substance is a component which is used in combination with the first thermoplastic resin, for example, by using in combination with the first thermoplastic resin at the time of the molding by the injection molding and mixed as an impurity. The inorganic substance is mixed for example as a so-called filler and includes glass fibers, carbon fibers, calcium carbonate, talc, barium nitrate, mica, aluminum hydroxide, magnesium hydroxide, carbon black, or clay and a pigment, etc. The inorganic substance is contained so that the elasticity modulus, breaking strength and impact resistance, etc. are improved and optical characteristics such as a color and a reflectivity, etc. as well as a heat resistance are changed to allow adjusting the physical properties to the desired properties.

### [Polymer Component different from First Thermoplastic Resin (Other Polymer Components)]

The composite resin composition can contain a polymer component different from the first thermoplastic resin (hereinafter referred to as the "other polymer component"). The other polymers include a thermoplastic resin other than the first thermoplastic resin contained as the main component, a polymer, and a thermosetting resin, etc. If the first thermoplastic resin is for example a polypropylene, the "other polymer component" includes: a polyolefin-based resin (such as a polyethylene) other than the polypropylene; a thermoplastic resin such as polystyrene (PS), acrylonitrile-butadiene-styrene copolymer (ABS resin), an acrylic resin such as PMMA, a polyvinyl chloride, polyamide resin, polybutylene terephthalate (PBT), polyethylene terephthalate (PET), polycarbonate (PC), polyetheretherketone (PEEK) and a polyphenylene sulfide (PPS); and a thermosetting resin such as phenol resin, epoxy resin, melamine resin, urea resin, unsaturated polyester resin, alkyd resin, polyurethane, and thermosetting polyimide, etc. Namely, the components other than the first thermoplastic resin as the main component in the composite resin composition, indicate other polymer components. The other polymer component may be either one kind of resin, etc. or two or more kinds of resins, etc. The other polymer component is contained so that mechanical characteristics such as the elasticity modulus, the breaking strength, and the impact resistance, etc. are improved and the optical characteristics such as the color and the reflectivity, etc. as well as the heat resistance are changeable to allow adjusting the physical properties to the desired physical properties.

As described above, the composite resin composition contains the first thermoplastic resin and an inorganic substance and/or a polymer component different from the first thermoplastic resin. In the composite resin composition, the first thermoplastic resin is a resin having the highest mass concentration in the composite resin composition. In the composite resin composition, the quantity of the first thermoplastic resin is preferably 40 mass% or larger, more preferably 50 mass% or larger, and more preferably 60 mass% or larger.

The composite resin composition contains at least one inorganic substance and/or a polymer component different from the first thermoplastic resin, the ("other polymer component") and may contain both of them. If containing an inorganic substance, the concentration is not particularly limited as long as the inorganic substance is not the main component and can be injection-molded. Further, if containing the other polymer component, its concentration is not particularly limited as long as the other polymer component is not the main component and can be injection-molded.

For example, the mass ratio of the total quantity of the inorganic substance and/or the other polymer component to the total quantity of the composite resin composition ("the total quantity of the inorganic substance and/or the other polymer component" to "the total quantity of the composite resin composition") may be set to 60 mass% or smaller, 50 mass% or smaller, 30 mass% or smaller, 15 mass% or smaller, 10 mass% or smaller, 8 mass% or smaller, and 5 mass% or smaller. The mass ratio of the other polymer to the first thermoplastic resin the ("other polymer component" to the "first thermoplastic resin") is less than 1 and, preferably, 0.9 or smaller, or 0.8 or smaller. The quantity of the other polymer component is smaller than that of the first thermoplastic resin and the inorganic substance content is larger in certain cases.

Further, the lower limit of the mass ratio of the total quantity of the inorganic substance and/or the other polymer component to the total quantity of the composite resin composition ("the total quantity of the inorganic substance and/or other polymer component" to "the total quantity of the composite resin composition") may be set to 0.1 mass% or larger, 0.5 mass% or larger, 1.0 mass% or larger, and 3.0 mass% or larger.

### [Recycled Resin Composition]

As the composite resin composition of the present invention, a recycled resin can be used. The recycled resin is a general term for pre-consumer articles such as waste and defective articles generated during the step for molding molded articles from virgin resin pellets as well as for resins recovered as waste plastic such as container-package recycled plastic (so-called "container plastic") after being distributed and consumed as molded articles on the market.

In the present invention, a recycled resin composition containing a polyolefin-based resin derived from a recycled resin is preferably utilized as the recycled resin composition. Namely, a recycled resin containing polyolefin-based resin and a resin containing an optional component used for a molded article in which polyolefin-based resin is appropriately used as the recycled resin may be utilized as the recycled resin composition.

The recycled resin in which a plurality of polyolefins such as a polyethylene and a polypropylene are used is recovered as a resin originally containing the plurality of recycled polyolefins. Further, various kinds of substances can be mixed during the recycling process and the recycled resin may be collected as a resin having the following so-called impurities mixed therein: inorganic powder, an inorganic filler, a pigment, a substance derived from a polystyrene, a substance derived from a 1,4-additional butadiene unit, and a substance derived from a polyethylene terephthalate or other plastics. A recycled resin composition for use in the present invention may contain this plurality of polyolefins and utilize various types of impurities. The recycled resin composition of the present invention may also contain virgin resin, etc. The content of the polyolefin-based resin derived from the recycled resin in the recycled resin composition may be optionally set. From the viewpoint of utilizing the recycled resin, the quantity of the polyolefin-based resin derived from the recycled resin is preferably 50 mass% or larger and more preferably 60 mass% or larger. Further, a substance other than the polyolefin-based resin is also contained due to recycling and therefore the upper limit of the polyolefin-based resin may be 99 mass% or smaller, 98 mass% or smaller, 95 mass% or smaller, and 92 mass% or smaller.

As a recycled resin composition containing the polyolefin-based resin derived from the recycled resin, a resin conforming to ISO 18263-1; 2015 can be used. The recycled resin compositions can be classified into rich articles, semi-rich articles and mixed articles. In case of recycled polyethylene, a resin having a polyethylene purity of 60 mass% or higher to less than 85 mass% is referred to as the semi-rich article and a resin having a purity of 85 mass% or higher is referred to the rich article. In case of recycled polypropylene, a resin having a polypropylene purity of 60 mass% or higher to less than 85 mass% is referred to as the semi-rich article, and a resin having a purity of 85 mass% or higher is referred to the rich article. As a recycled resin composition mainly containing polyethylene, ISO 18263-1-PE-M1 (REC), NG1 (PE rich article: uncolored pellets of PE ≥ 85%), ISO 18263-1-PE-M1 (REC), NG3 (PE rich article: uncolored and volume-reduced article of PE ≥ 85%), ISO 18263-1-PE-MPO (REC), NG1 (PE semi-rich article: uncolored pellets of 85% > PE ≥ 60%), ISO 18263-1-PE-MPO (REC), and NG3 (PE semi-rich article: uncolored and volume-reduced article of 85% > PE > 60%) can be used.

As the recycled resin composition mainly containing a mixture of polyethylene and polypropylene, ISO 18263-1-MPO (REC), NG1 (PE/PP mixture: uncolored pellets), ISO 18263-1-MPO (REC) and NG3 (PE/PP mixture: uncolored and volume-reduced article) can be used. In the above description, the "mixture" indicates 60% > PE or PP > 40%.

Further, as a recycled resin composition mainly containing polypropylene, ISO 18263-1-PP-M1 (REC), NG1 (PP rich article: uncolored pellets of PP ≥ 85%), ISO 18263-1-PP-M1 (REC), NG3 (PP rich article: uncolored and volume-reduced article of PP ≥ 85%), ISO 18263-1-PP-MPO (REC), NG1 (PP semi-rich article: uncolored pellets of 85% > PP ≥ 60%), ISO 18263-1-PP-MPO (REC), and NG3 (PP semi-rich article: uncolored and volume-reduced article of 85% > PP ≥ 60%) can be used.

The manufacturing method of the present invention, may appropriately utilize the recycled resin by crushing and mixing it into lumps and powder as well as melting and kneading the crushed and mixed substance by using a general pelletizer, thereby preparing the pellets beforehand.

### [Pelletizing Process]

The manufacturing method of the present invention includes a pelletizing process for melting and pelletizing the thermoplastic resin composition containing the first thermoplastic resin, in which the resin pellets are obtained by: supplying the thermoplastic resin composition to a supply port of a pellet molding machine; melting the thermoplastic resin composition supplied through the supply port in a melting and kneading part; retaining in a resin reservoir part the thermoplastic resin composition melted in the melting and kneading part, discharging the thermoplastic resin composition in a strand shape retained in the resin reservoir part from a discharge part; and shredding the thermoplastic resin composition in a strand shape discharged from the discharge part.

### [Pellet Molding Machine 10]

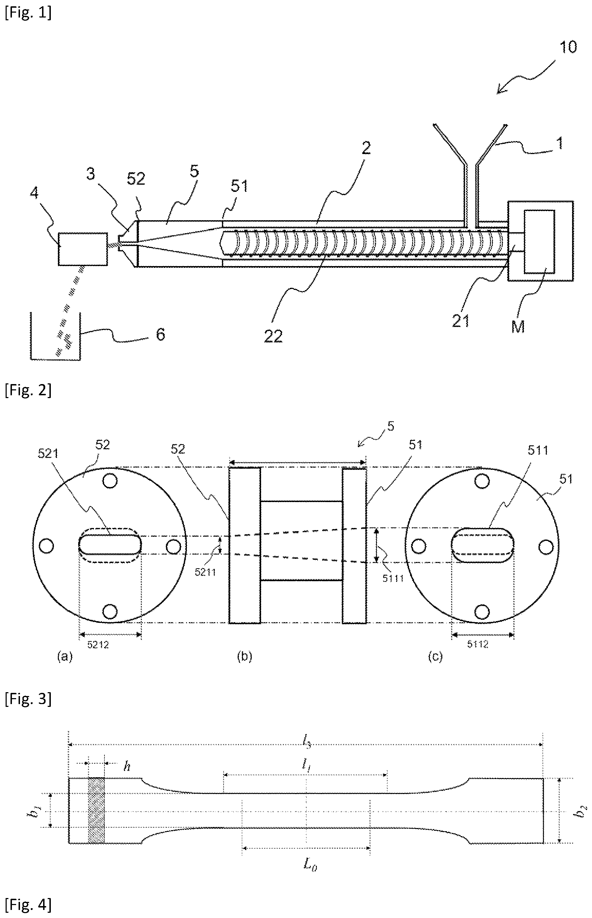

Fig. 1 shows one example of the pellet molding machine for carrying out the pelletizing process. This pellet molding machine relates to the first embodiment of the molding machine of the present invention and is suitable as a first manufacturing method of the present invention.

A pellet molding machine 10 in Fig. 1 comprises a supply port 1, a melting and kneading part2, a resin reservoir part 5, a discharge part 3, and a pelletizer 4. The pellet molding machine 10 can melt and mold the resin composition into pellets. The pellets thus obtained are collected in a container 6 such as a flexible container bag. Hereinafter, the pellet molding machine 10 will be described in more detail.

### [Supply Port 1]

The supply port 1 is a hopper-type supply port. The thermoplastic resin composition in the lump, powder, and pellet-types are supplied and transported to the melting and kneading part 2 by way of an upper part of the supply port 1.

### [Melting and Kneading Part 2]

In the melting and kneading part 2, the thermoplastic resin composition supplied from the supply port 1 is melted and kneaded. This melting and kneading part 2 is heated to reach the melting temperature of the thermoplastic resin composition and a screw 22 connected to a motor M via a cylinder 21 is rotated to extrude the thermoplastic resin composition toward the side of the resin reservoir part 5. Further, the thermoplastic resin composition then passes between the pipe of this melting and kneading part 2 and the screw, and a shear stress is applied to the thermoplastic resin composition for kneading.

### [Resin Reservoir Part 5]

The resin reservoir part 5 is provided between the melting and kneading part 2 and the discharge part 3. This resin reservoir part 5 is heated to maintain the melting temperature and can relieve the shear stress that is applied to the thermoplastic resin composition melted and kneaded in the melting and kneading part 2.

This resin reservoir part 5 is oriented in a direction extruding the thermoplastic resin composition from an opening part on the side of a first connection part 51 to the melting and kneading part 2 toward an opening part on the side of a second connection part 52 to the discharge part 3 and has a tapered shape in the extruding direction.

Fig. 2 is a schematic drawing for describing the aforementioned resin reservoir part 5 in more detail. Fig. 2(a) is a left lateral view showing the resin reservoir part 5 seen from the side of the second connection part 52, Fig. 2(b) is a front view, and Fig. 2(c) is a right lateral view showing the resin reservoir part 5 seen from the side of the first connection part 51.

On the side of the first connection part 51 of the resin reservoir part 5, an opening part 511 is provided to connect the resin reservoir part 5 to an opening part of the melting and kneading part 2. On the second connection part 52 side, an opening part 521 is provided to connect the resin reservoir part 5 to an opening part of the discharge part 3. The part from the opening part 511 to the opening part 521 is in a hollow state and this hollow part acts as a flow path for the resin. An area of this opening part 511 is equivalent to a cross-sectional area A1 of the flow path for the resin in the first connection part 51. Further, an area of this opening part 521 is equivalent to a cross-sectional area A2 of the flow path for the resin in the second connection part 52.

The pellet molding machine used in the present invention can be achieved by connecting a pipe between the melting and kneading part and the discharge part of a general pellet molding machine. This pipe has the same shape as that of the cross section of the pipe in the melting and kneading part and also gradually tapers to match the cross section of the connection part of the discharge part. This pipe part is not subjected to shearing by the cylinder and serves as a resin reservoir part.

### [Cross-Sectional Ratio of the Connection Parts]

In the tapered shape of the resin reservoir part 5, the ratio of the cross-sectional area A2 to the cross-sectional area A1 (A2 to A1) is 1% to 50%. The cross-sectional area A1 corresponds to the area of the opening part 511. Further, the cross-sectional area A2 corresponds to the area of the opening part 521. If this ratio (A2 to A1) is too high, large shearing may occur near the discharge part 3, that lowers the physical properties of the thermoplastic resin composition. If this ratio is too low, the shearing may occur in the resin reservoir part 5 and lower the physical properties of the thermoplastic resin composition. These tendencies are particularly drastic in the composite resin composition. The upper limit of this ratio (A2 to A1) is preferably 40% or lower or 30% or lower. While the lower limit of this ratio (A2 to A1) may be set depending on the shape of the discharge part 3, and may be set to 3% or larger, 5% or larger, 8% or larger, or 10% or larger.

### [Reduction in Cross-Sectional Area]

A length L1 from the first connection part 51 to the second connection part 52 is designed in consideration of the retention time in the resin reservoir part and the shearing. The resin reservoir part 5 is shaped so that the cross-sectional area of the resin reservoir part 5 is reduced in a range from 0.1 to 2.0 %/mm, based on the cross-sectional area A1. Namely, by setting the length L1, a predetermined displacement of the cross-sectional area can be achieved. This reduction of the cross-sectional area may be either continuous with a fixed angle of inclination of the tapered shape or taper discontinuously stepwise. The displacement of the cross-sectional area may utilize a value averaged from """1-ratio of sectional area(A2/A1)" x 100"/length L1". For example, if A2/A1 is 20% and the length L1 is 100 mm, then "1-0.2/100" = 0.8 %/mm. If the resin reservoir part 5 also tapers discontinuously, a cross-sectional area (A3) that is at least an intermediate length position between a position of the cross-sectional area A1 and a position of the cross-sectional area A2 (position in L1/2 from the first connection part 51), is preferably smaller than the cross-sectional area A1. For example, the ratio of the cross-sectional area A3 to the cross-sectional area A1 can be set to approximately 40 to 80%.

If this cross-sectional area is reduced in a range exceeding 2.0 %/mm, large shearing may occur to the resin in the resin reservoir part 5. Further, if the cross-sectional area is reduced in a range that is less than 0.1 %/mm, the resin reservoir part 5 becomes too long so that sometimes this makes designing an apparatus difficult and substantially prolongs the retention time. This displacement of the cross-sectional area is more preferably 0.2 to 1.0 %/mm.

### [Discharge Part 3]

The discharge part 3 discharges thermoplastic resin composition which has passed through the resin reservoir part 5 and has been melted and kneaded into a strand shape. The pelletizer 4 shreds and pelletizes the thermoplastic resin composition in a strand shape discharged from the discharge part 3. In the molding machine of the present invention, the thermoplastic resin composition may be pelletized by hot cutting for shredding the thermoplastic resin composition immediately after being discharged from the discharge part or by underwater cutting. The strand shape also contains a short strand shape. The molding machine of the present invention may be configured as the molding machine with a shredding part for shredding and pelletizing the above-described thermoplastic resin composition that has been discharged from the discharging part.

The resin pellets obtained by pelletizing the thermoplastic resin composition by using the above pellet molding machine 10 are utilized for the injection molding process described below.

### [Extrusion Conditions]

In the pellet molding machine, an extrusion amount per unit time is preferably controlled within a predetermined range depending on the type of thermoplastic resin composition such as the composite resin composition and the recycled resin composition as well as an extrusion pressure in the pellet molding machine. Based on the above extrusion amount, the volume of the pipe connected as the resin reservoir part is adjusted within a predetermined range to have a magnitude which relieves the shearing stress. A magnitude of the volume of the pipe for relieving the above shearing stress is preferably set such that the retention time of the resin composition is specifically 5 to 600 seconds.

The pellet molding machine can also be configured to include the resin reservoir part having a volume that achieves the above retention time. This retention time is determined based on the extrusion amount divided by the volume of the resin reservoir part. The above retention time may also be determined based on the length of a screw provided to correspond to the melting and kneading part. If the screw is shortened relative to the pipe to the discharge part, a large shearing is applied to the part between the pipe and the position where the screw is provided, and therefore the screw is regarded as the melting and kneading part. Meanwhile, inside the pipe without the screw, the shearing applied due to the screw is eliminated and therefore this volumetric part can also be regarded as the resin reservoir part that controls the retention time, etc.

The above retention time is more preferably 30 seconds or longer, and further preferably 60 seconds or longer. The longer the retention time, the more the shearing history can resolve the molding history to achieve a resin composition that better maintains the initial physical properties. Meanwhile, the upper limit of the retention time is preferably 300 seconds or shorter, and 240 seconds or shorter. According to the effect of prolonging the retention time and resolving the molding history by the shearing history, the variation in the amount becomes smaller on and after a fixed amount and therefore the retention time does not need to be significantly prolonged from the point of view of designing the apparatus. When the apparatus is designed with the retention time as the volume, a design achieving a minimum retention time is possible based on the maximum extrusion amount in the pellet molding machine. Otherwise, the apparatus may be designed to operate such that the retention time is controllable based on the length of the pipe attached as the resin reservoir part and therefore the length can be appropriately changed depending on the operating conditions. The above pelletizing process can be implemented by appropriately referring to a method for molding a thermoplastic resin composition in JP 2017 - 148 997 A.

The temperature during the pelletizing process may be appropriately set within ranges such as ±50°C and ±40°C of the standard injection molding temperature of the virgin resin. The temperature in the pelletizing process is preferably higher than the standard injection molding temperature for the pellets of virgin resin in the injection molding process described below and is preferably +10°C or higher. The pelletization is performed at the above temperature, thereby further improving the physical properties of the molded article of the composite resin composition of the recycled resin composition obtained by injection molding. This improvement probably results because the shearing that is applied to the composite resin composition of the recycled resin composition can be easily eliminated. The temperature in the pelletizing process is a temperature setting in the resin reservoir part. The temperature setting in the melting and kneading part may be identical to the temperature setting in the resin reservoir part or may be appropriately set so that it gradually rises from the supply port side to the resin reservoir part side. The temperature in the pelletizing process is preferably +20°C or higher where the shearing can be easily eliminated. Meanwhile, if the temperature is too high, the resin may deteriorate and therefore the standard injection molding temperature is preferably +60°C or lower, and more preferably +50°C or lower.

As described above, the pelletizing process in the manufacturing method of the present invention can be implemented by using the pellet molding machine 10, the composite resin composition, etc. of the recycled resin composition, etc. is supplied to the supply port 1 of the pellet molding machine 10, melted and kneaded in the melting and kneading part 2, retained in the resin reservoir part 5, discharged in a strand shape from the discharge part 3, and shredded by the pelletizer 4 into pellets.

### [Injection Molding Process]

The manufacturing method of the present invention can be configured to include the injection molding process for molding the resin pellets pelletized in the pelletizing process by the injection molding machine, in which the pellets are molded at an injection molding velocity lower than the standard injection molding velocity for the pellets of virgin resin by the injection molding machine. The above injection molding achieves a molded article having more excellent physical properties than those of the molded articles of the thermoplastic resin composition of the conventional composite resin composition. Particularly, in the second manufacturing method of the present invention, the injection molding process in which the resin pellets are molded at an injection molding velocity lower than the standard injection molding velocity for pellets of virgin resin by the injection molding machine proves effective.

### [Virgin Resin]

According to the manufacturing method of the present invention, in the injection molding process, etc., the process for manufacturing the pellets is set in comparison with the standard injection molding conditions for pellets of virgin resin. The first thermoplastic resin is utilized in the composite resin composition for pellets of virgin resin. A description is given by referring to the recycled resin composition as one example of the composite resin composition. If the first thermoplastic resin as a main component of the recycled resin composition is polypropylene, the polypropylene resin pellets are used as the virgin resin pellets. Further, if the main component of the recycled resin composition is polyethylene, the polyethylene resin pellets are used as the virgin resin pellets. Preferably, the virgin resin pellets substantially include the first thermoplastic resin. Sometimes the pellets contain impurities and therefore, in the virgin resin pellets, a concentration of the first thermoplastic resin composition can be utilized that has specifications suitable as resin within the range for example of 98 mass% or larger, 99 mass% or larger and 99.5 mass% or larger. The main component of the recycled resin composition is the component occupying the largest percentage of the recycled resin composition. The percentage occupied by the main component in the recycled resin composition is preferably 50 mass% or larger, and more preferably is 60 mass% or larger.

### [Standard Injection Molding Velocity]

In the injection molding, the number of screw rotations (rpm) and the injection molding velocity (mm/s) are important setting items in the molding conditions. If the injection molding velocity is too high, air is mixed into the molten resin that tends to easily generate gas as well cause burrs and jetting. Meanwhile, if the injection molding velocity is too low, kneading cannot be sufficiently performed and problems such as irregular material qualities and defective filling occur. Therefore, molding conditions suitable for molding dependent on the respective resins and molding machines are examined and the standard injection molding velocity as the suitable condition is set depending on the resin, etc. In the present invention, the molding conditions on the composite resin composition are set with the standard injection molding velocity for the pellets of virgin resin as the basis. For example, if there is sufficient range in the standard injection molding velocity, the injection molding velocity range of 50 to 70 mm/s can be set for virgin resin pellets as a suitable molding condition, and the manufacturing method of the present invention can also be set with a median value of a range having a representative value (for example 60 mm/s) of the standard injection molding velocity.

### [Injection Molding Velocity]

The manufacturing method of the present invention provides the injection molding at a lower injection molding velocity than the standard injection molding velocity. If the injection molding velocity is lower than the standard injection molding velocity, there is usually concern that problems may occur due to irregular material qualities caused by the insufficient melting and defective filling. Meanwhile, unintendedly, it has been clearly shown that even at a low injection molding velocity, irregular qualities can be suppressed in pellets of composite resin composition such as recycled resin pellets, that are pelletized in accordance with the pelletizing process of the present invention, and that mechanical properties such as a tensile elongation are to the contrary further improved.

The above injection molding velocity is preferably a velocity equal to 30% to 70% of the standard injection molding velocity. The ratio of the injection molding velocity of the composite resin composition of the present invention to the above standard injection molding velocity can be set based on the representative value of the standard injection molding velocity. For example, if the representative value of the standard injection molding velocity is 60 mm/s, the injection molding velocity can be set to 18 mm/s (velocity of 30%) to 42 mm/s (velocity of 70%). The above velocity is more preferably 35% or higher, further preferably 40% or higher, and particularly preferably 45% or higher than the standard injection molding velocity. The above velocity is also more preferably 65% or lower, further preferably 60% or lower, and particularly preferably 55% or lower than the standard injection molding velocity. The more suitable the range that is set, the further the extension and other values can be easily improved for molding using the composite resin composition.

### [Injection Molding Temperature]

The temperature in the injection molding process of the composite resin composition of the present invention is preferably ±20°C of the standard injection molding temperature for virgin resin pellets. Further, the above temperature is more preferably ±10°C of the standard injection molding temperature for virgin resin pellets. This temperature can be based on the temperature setting in the screw part of the injection molding machine. In the injection molding, when the temperature is too low, the fluidity of the resin is too low so that defective filling occurs and the pressure becomes too high so that the load on the equipment is too large. If the temperature is too high, the fluidity of the resin becomes excessively high, so that sometimes the pressure is not applied which causes defective filling and the resin becomes colored while deteriorating during the molding processing. Therefore, the molding temperature depending on the resin, the equipment and the molding shape is also standardized by for example referring to a proper temperature suitable for the resin. The temperature in the injection molding process for the composite resin composition of the present invention can be set with a temperature standardized for virgin resin pellets as the standard injection molding temperature. If the standard injection molding temperature is irregular, with the median value in the range serving as the representative value of the standard injection molding temperature, the irregularity is preferably ±10°C or lower relative to the temperature.

The shape of the molded article injection-molded by the manufacturing method of the present invention can be various types of shapes for the molded article suitable for injection molding. According to the present invention, when the physical properties are compared between the injection-molded article using the virgin resin pellets and the molded article utilizing the composite resin composition such as the recycled articles, the breaking extensions which are considered to be most inferior in the latter can be made substantially identical to each other. The Izod impact strength is better in the composite resin composition such as the recycled article and usually very excellent molded articles can be manufactured.

### [Injection-Molded Article]

The injection-molded article of the recycled resin composition according to the present invention contains a polyolefin-based resin derived from a recycled resin which has an extension percentage of 300% or higher. Though containing the polyolefin-based resin derived from the recycled resin, this molded article has a high extension percentage which is likely to lower in case of using the recycled resin in particular and can be easily used for various uses. The molded article of the recycled resin composition of the present invention can be manufactured by the method for manufacturing the molded article of the composite resin composition of the present invention, and the respective aspects of the invention can be implemented by employing the corresponding configuration.

The extension of the molded article can be set at an extension when a test piece is used with a dimension of 4 mm in thickness and 10 mm in width in accordance with the tensile testing K7161 under JIS. In this test piece, a stress-strain curve (S - S curve) is fabricated by using the result obtained by the tensile testing with a pulling velocity of 50 mm/min, so that the breaking extension can be determined. This extension is determined from "ΔL (displacement amount (mm) until breaking in the tensile testing)/L (length (mm) of the test piece) x 100(%)." For example, if a test piece having a length (L) of 50 mm in the tensile testing part breaks at the length (ΔL) where the test piece is pulled by 50 mm, the extension is 100%.

The extension is preferably 300% or higher, and more preferably 340% or higher. The molded article of the recycled resin composition having the above extension is preferably achieved as a molded article using the recycled resin composition containing polypropylene as the main component and also containing the polyolefin-based resin derived from the recycled resin. The extension of even ordinary virgin resin of polypropylene is approximately 360% so the breaking extensions are equivalent.

Further, in the molded article of the recycled resin composition of the present invention, the Izod impact strength is preferably 3.5 kJ/m² or larger, preferably 3.8 kJ/m² or larger, and particularly preferably 4.0 kJ/m² or larger. The larger the Izod impact strength is, the more resistant the molded article is to impact. The molded article of the recycled resin composition having the above Izod impact strength is preferably achieved as a molded article using the recycled resin composition containing polypropylene as the main component and also containing the polyolefin-based resin derived from the recycled resin. Even in case of the extension of virgin resin of ordinary polypropylene, the Izod impact strength is approximately 2.8 kJ/m² and therefore the molded article of the recycled resin composition of the present invention is superior.

### Examples

Hereinafter, the present invention will be described in detail by way of the examples.

### [Evaluation Items]

### [Tensile Testing]

The tensile testing was conducted by using the "AG-Xplus 100KN" manufactured by K. K. Tokyo Shikenki Shimadzu. The stress-strain curve (S - S curve) is fabricated by utilizing the results obtained in the tensile testing so that the breaking extension can be determined. The test piece is obtained by molding the below-mentioned test piece having a thickness of 4 mm and width of 10 mm. The pulling velocity is set to 50 mm/min.

### [Izod Impact Strength]

In the Izod impact test, an evaluation is performed in conformance with JIS K7110. "TOYOSEIKI DG-UB" is used with 2.75J utilized for the hammer.

### [Injection Molding]

Molded article for the tensile testing: Injection molding is performed by using a plastic injection molding machine "SI-80V" manufactured by Toyo Machinery & Metal Co., Ltd. and the test piece dimensions are set to a thickness of 4 mm and 10 mm in width as the shape of the injection molded article in conformance with the tensile testing K7161 under JIS. (See Fig. 3; width (b1): 10 mm, L₀: 50 mm.)

Molded article for the Izod impact strength test: The injection molding is performed by using a plastic injection molding machine "SI-80V" manufactured by Toyo Machinery & Metal Co., Ltd. and the shape of the injection-molded article shown in Fig. 4 is achieved. (In Fig.4; L: 80 mm, b: 4 mm, h: 10 mm, hv: 8 mm.)

### [Experimental Apparatus]

### - Extruder

The resin is melted to make the pellets by utilizing a biaxial kneading extruder "TEM-35B" manufactured by Shibaura Machine Co., Ltd.

### - Resin reservoir part (tapered shape)

By utilizing an extruding screw incorporation part of the extruder as the melting and kneading part (melting and kneading part 2 in Fig. 1), a tapered pipe from the melting and kneading part to the discharge part is provided as the resin reservoir part (resin reservoir part 5 in Fig. 1) between the melting and kneading part and the discharge part (discharge part 3 in Fig. 1).

In an opening part 511, a short diameter 5111 is approximately 37.2 mm and a long diameter 5112 is approximately 67 mm. Further, in an opening part 512, a short diameter 5211 is approximately 10 mm and a long diameter 5212 is approximately 50 mm. The ratio of an area A1 of the opening part 511 to an area A2 of the opening part 521 (A2/A1) is 20%.

The length (L1) from a first connection part 51 to a second connection part 52 is 150 mm.

Therefore, the areas of the opening parts (cross-sectional area of the flow path of the resin) from the opening part 511 to the opening part 521 are reduced at approximately 0.53 %/mm.

### - Resin reservoir part (straight-pipe type)

By utilizing an extruding screw incorporation part of the extruder as the melting and kneading part (melting and kneading part 2 in Fig. 1), a straight pipe having the same shape as a pipe cross-section of the melting and kneading part is provided as the resin reservoir part between the melting and kneading part and the discharge part (discharge part 3 in Fig. 1).

### - Pelletizer

A pelletizer (pelletizer 4 in Fig. 1) is provided for shredding strands discharged from the discharge part of the extruder into pellets having a length of approximately 5 mm. In case of installing a cooling apparatus to perform cooling, the pelletizer is rearranged following this cooling apparatus and is operated.

### [Raw Materials]

- Complex resin composition (1): To form the polypropylene resin composition, 1 pts.mass of JM-370S (LOTTE), 1 pts.mass of J-750HP (Prime Polypro (^{®})), and 1 pts.mass of JH-370A (LOTTE) are mixed at this ratio. Talc is mixed with this mixture so that the concentration of talc is 12 mass% and the pellets obtained by melting and kneading the mixture are used as the composite resin composition (1).
- VPP: "Prime Polypro (^{®}) J700GP" manufactured by Prim Polymer Co., Ltd.
- HRC: Recycled resin pellets (manufactured by Hiroshima Recycle Center) equivalent to PP-MPO (component ratio of PP: 60 to 85%) under ISO 18263-1. These resin pellets contain as impurities polystyrene and inorganic materials insoluble in a solvent and which occupy about 8 mass% of the entire resin.

### [Manufacture Example A1, Comparative Example A1, and Reference Example A1]

The conditions for molding the composite resin composition (1) are examined in connection with the respective cases of using the tapered-shape type and the straight-pipe type as the resin reservoir part.

### [Experimental Conditions]

- Temperature: The temperatures in the melting and kneading part, the resin reservoir part, and the discharge part are adjusted to 210°C.
- Extrusion amount: The number of screw rotations is adjusted to 100 rpm.

When the number of rotations of the screw is 100 rpm, the extrusion amount is 0.12 kg/min with a feeder rate-limiting the supply amount.
- Take-over velocity: The take-over velocity is set to 90 rpm.
- Resin reservoir part (tapered-shape type): A pipe having on the side of the first connection part, a cross-sectional area with the same shape as the sending side of the melting and kneading part in which a biaxial extrusion screw is incorporated in the above-mentioned experimental apparatus, which has a cross-sectional area having the same shape as that of an entry side of the discharge part on a second connection part, and which has a length of 150 mm and a tapered shape in an extruding direction is provided as the resin reservoir part (straight-pipe type) between the melting and kneading part and the discharge part. The temperature in the pipe (resin reservoir part) is also adjusted to 210°C. The retention time in the resin reservoir part is about 108 seconds.
- Resin reservoir part (straight-pipe type): The straight-pipe-type resin reservoir part is configured such that the straight pipe having on the first connection part side, the cross-sectional area having the same shape as the sending side of the melting and kneading part and having a length of 125 mm is provided as the resin reservoir part between the melting and kneading part and the discharge part.

After performing the following pelletization based on the above-mentioned experimental apparatus, raw materials, and experimental conditions, the injection molding is performed. The injection molding conditions are: an injection molding temperature of 210°C, screw rotations of 100 rpm, and an injection molding velocity of 90 rpm.

### [Comparative Example A1]

The composite resin composition (1) is injection-molded in that state.

### [Reference Example A1]

The composite resin composition (1) is pelletized by using the resin reservoir part (straight-pipe type) and the injection molding is then performed.

### [Manufacturing Example A1]

The composite resin composition (1) is pelletized by utilizing the resin reservoir part (tapered-shape type) and the injection molding is then performed.

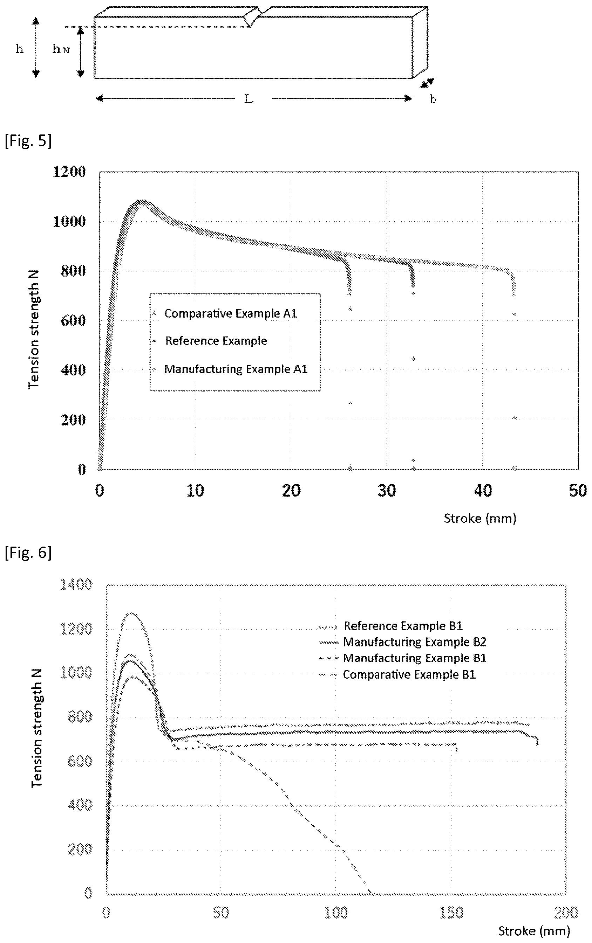

Fig. 5 shows results of the tensile testing for sheets of Manufacturing Example A1, Comparative Example A1, and Reference Example A1. The tensile strength is approximately 26 N/mm² in each case. Further, the Izod impact strength is about 5.5 kJ/m² in each case. The tensile extension has been confirmed as greater in the order of Comparative Example A1, Reference Example A1, and Manufacturing Example A1. Providing the resin reservoir part improves the tensile extension, and the tensile extension becomes remarkably excellent by using in particular the resin reservoir part having a tapered shape.

### [Manufacturing Examples B1 to B4, Comparative Example B1, and Reference Example B1]

The straight-pipe-type one is used as the resin reservoir part and the manufacturing conditions examined mainly in connection with the recycled resin composition (HRC).

### [Experimental Conditions]

- Temperature: The temperatures in both the melting and kneading part and the discharge part are respectively adjusted to 200°C and 230°C. These temperatures are set to the extrusion temperatures.
- Extrusion amount: The number of screw rotations is appropriately adjusted to 100 rpm.

When the number of screw rotations is 100 rpm, the extrusion amount is 0.12 kg/min with rate-limiting of supply amount by a feeder.
- Resin reservoir part (straight-pipe type): The straight pipe having a cross-sectional area (about 2202 mm²) in the same shape as that of the melting and kneading part in which the biaxial extrusion screw in the above-described experimental apparatus is incorporated and having a length of 125 mm is provided as the resin reservoir part between the melting and kneading part and the discharge part. The temperature in the pipe (resin reservoir part) is also adjusted to the same temperature as the temperatures in the melting and kneading part and the discharge part.

The following pelletization and injection molding are performed based on the above-mentioned experimental apparatus, raw materials, and experimental conditions. The molding conditions in the respective test conditions are shown in Table 1. The retention time in Manufacturing Example including the pelletizing process is about 138 seconds based on the extrusion amount and the volume of the resin reservoir part.

**[Table 1]**

| | | Pelletizing Process | | | Injection Process | | | Evaluation | | |
|---|---|---|---|---|---|---|---|---|---|---|
| | | Pelletize Condition | | | Injection Condition | | | | | |
| | | Temperature (°C) | Number of screw rotations (rpm) | Take-over velocity (rpm) | Temperature (°C) | Number of screw rotations (rpm) | Injection molding velocity (mm/s) | Tensile elongation (mm) | Tensile extension (%) | Izod impact strength (kJ/m²) |
| Reference Example B1 | VPP | - | - | - | 200 | 150 | 60 | 184 | 368 | 2.8 |
| Comparative Example B1 | HRC | - | - | - | 200 | 150 | 60 | 145 | 290 | 4 |
| Manufacturing Example B1 | HRC | 230 | 100 | 45 | 200 | 150 | 60 | 153 | 306 | 4.3 |
| Manufacturing Example B2 | HRC | | | | 200 | 75 | 30 | 187 | 374 | 4.3 |
| Manufacturing Example B3 | HRC | | | | 230 | | | 156 | 312 | 3.9 |
| Manufacturing Example B4 | HRC | | | | 250 | | | 167 | 334 | 4.1 |

### [Test Results]

Reference Example B1 shows injection-molding of the virgin resin (VPP) and the molded article is manufactured based on the standard injection molding conditions found from results of this injection molding.

Comparative Example B1 shows molding under injection molding conditions common with conditions in Reference Example B1 without performing the pelletizing process. Generally, the physical properties such as extension will lower if the molded article is manufactured based on the same conditions as the injection molding conditions for virgin resin.

In Manufacturing Examples B1 to B4, the extension is improved more than in Comparative Example B1. Particularly, Manufacturing Example B2 provides an extension equivalent to the extension in Reference Example B1 (virgin resin).

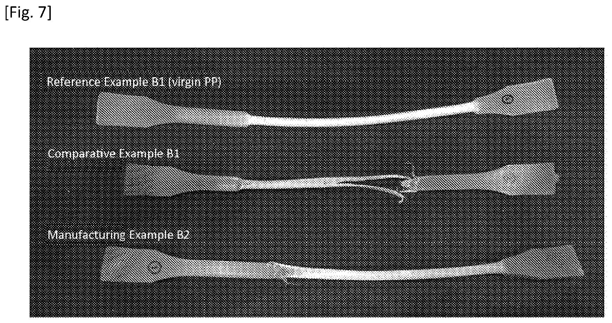

The stress-strain curves (S - S curves) in the tensile testing in Reference Example B1, Comparative Example B1, and Manufacturing Examples B1, B2 are shown in Fig. 6. Further, an image of the test pieces after the tensile testing in Reference Example B1, Comparative Example B1, and Manufacturing Example B2 is shown in Fig. 7. The molded article in Comparative Example B1 exhibits low extension, breaks, and is heavily damaged in the tensile testing. Meanwhile, the molded article in Manufacturing Example B2 is in a state equivalent to the molded article of the virgin resin in Reference Example B1.

### Industrial Applicability

The present invention is capable of improving the physical properties of the thermoplastic resin composition of the composite resin composition such as the recycled resin composition. Further, diverse molded articles of the composite resin composition such as the recycled resin composition can be rendered and this is industrially useful.

### Reference Signs List

- 1: Supply port
- 10: Pellet molding machine
- 2: Melting and kneading part
- 21: Cylinder
- 22: Screw
- 3: Discharge part
- 4: Pelletizer
- 5: Resin reservoir part
- 51: First connection part
- 52: Second connection part
- 6: Container

## Claims

1. A molding machine (10) for a thermoplastic resin composition configured to melt a thermoplastic resin composition including a first thermoplastic resin and to mold the thermoplastic resin composition into a strand shape, the molding machine comprising:
a supply port (1) configured to supply the thermoplastic resin composition;
a melting and kneading part (2) configured to melt and to knead the thermoplastic resin composition supplied from the supply port (1);
a resin reservoir part (5) configured to retain the thermoplastic resin composition melted and kneaded in the melting and kneading part (2); and
a discharge part (3) configured to discharge in a strand shape the thermoplastic resin composition retained in the resin reservoir part (5);
wherein the resin reservoir part (5) has a shape tapering from the melting and kneading part (2) toward the discharge part (3); **characterized in that**
the tapered shape in the resin reservoir part (5) is configured such that:
a ratio (A2 to A1) of a cross-sectional area A2 of a flow path for resin in a second connection part (52) between the resin reservoir part (5) and the discharge part (3), to a cross-sectional area A1 of a flow path for resin in a first connection part (51) between the resin reservoir part (5) and the melting and kneading part (2), is 1% to 50%; and
in a length L1 from the first connection part (51) to the second connection part (52), with the cross-sectional area A1 as a reference, the cross-sectional area of the flow path for the resin in the resin reservoir part (5) decreases in a range from 0.1 to 2.0%/mm.

2. The molding machine (10) according to Claim 1,
wherein a ratio of a cross-sectional area A3 in an intermediate length position between the position of the cross-sectional area A1 and the position of the cross-sectional area A2, to the cross-sectional area A1 is 40 to 80%.

3. A method for manufacturing a molded article of a thermoplastic resin composition, comprising a pelletizing process for melting and molding into a pellet shape a thermoplastic resin composition containing a first thermoplastic resin, in which resin pellets are obtained by:
supplying the thermoplastic resin composition to a supply port (1) of a pellet molding machine (10);
extruding the thermoplastic resin composition supplied through the supply port (1), while melting the thermoplastic resin composition in a melting and kneading part (2);
retaining the thermoplastic resin composition melted in the melting and kneading part (2), in a resin reservoir part (5) having a shape tapering in an extruding direction of the thermoplastic resin composition;
discharging the thermoplastic resin composition in a strand shape retained in the resin reservoir part (5) from a discharge part (3); and
shredding the thermoplastic resin composition in a strand shape discharged from the discharge part (3),
wherein the tapered shape is configured such that a ratio (A2 to A1) of a cross-sectional area A2 of a flow path for resin in a second connection part (52) between the resin reservoir part (5) and the discharge part (3), to a cross-sectional area A1 of a flow path for resin in a first connection part (51) between the resin reservoir part (5) and the melting and kneading part (2), is 1% to 50%, and in a length L1 from the first connection part (51) to the second connection part (52), with the cross-sectional area A1 as a reference, the cross-sectional area of the flow path for the resin in the resin reservoir part (5) decreases in a range from 0.1 to 2.0%/mm.

4. The manufacturing method according to Claim 3, wherein the thermoplastic resin composition is a composite resin composition containing a first thermoplastic resin and an inorganic substance and/or a polymer component different from the first thermoplastic resin.

5. The manufacturing method according to Claim 4, comprising an injection molding process for molding the resin pellets pelletized in the pelletizing process by an injection molding machine (10), wherein in the injection molding process the resin pellets are molded at an injection molding velocity which is lower than a standard injection molding velocity relative to pellets of virgin resin by the injection molding machine.

6. The manufacturing method according to Claim 5,
wherein the temperature in the pelletizing process is the standard injection molding temperature +10°C or higher relative to the pellets of virgin resin;
wherein the retention time in the resin reservoir part in the pelletizing process is 5 seconds to 600 seconds,
wherein the injection molding velocity in the injection molding process is 30% to 70% of the standard injection molding velocity; and
wherein the temperature in the injection molding process is within the standard injection molding temperature ±20°C relative to the pellets of virgin resin.

7. The manufacturing method according to any of Claims 3 to 6, wherein the first thermoplastic resin is a polyolefin-based resin.

## Patentansprüche

1. Formmaschine (10) für eine thermoplastische Harzzusammensetzung, die konfiguriert ist zum Schmelzen einer thermoplastischen Harzzusammensetzung, die ein erstes thermoplastisches Harz enthält, und zum Formen der thermoplastischen Harzzusammensetzung zu einer Strangform, wobei die Formmaschine umfasst:
eine Zufuhröffnung (1), die ausgebildet ist zum Zuführen der thermoplastischen Harzzusammensetzung;
einen Schmelz- und Knetteil (2), der ausgebildet ist zum Schmelzen und Kneten der von der Zufuhröffnung (1) zugeführten thermoplastischen Harzzusammensetzung;
einen Harzreservoirteil (5), der ausgebildet ist zum Aufbewahren der in dem Schmelz- und Knetteil (2) geschmolzenen und gekneteten thermoplastischen Harzzusammensetzung; und
einen Ausgabeteil (3), der ausgebildet ist zum Ausgeben der in dem Harzreservoirteil (5) aufbewahrten thermoplastischen Harzzusammensetzung in einer Strangform;
wobei das Harzreservoirteil (5) eine sich von dem Schmelz- und Knetteil (2) zu dem Ausgabeteil (3) hin verjüngende Form aufweist; **dadurch gekennzeichnet, dass**
die sich verjüngende Form in dem Harzreservoirteil (5) so ausgebildet ist, dass:
ein Verhältnis (A2 zu A1) einer Querschnittsfläche A2 eines Fließweges für Harz in einem zweiten Verbindungsteil (52) zwischen dem Harzreservoirteil (5) und dem Ausgabeteil (3) zu einer Querschnittsfläche A1 eines Fließweges für Harz in einem ersten Verbindungsteil (51) zwischen dem Harzreservoirteil (5) und dem Schmelz- und Knetteil (2) 1 % bis 50 % beträgt; und
in einer Länge L1 von dem ersten Verbindungsteil (51) zu dem zweiten Verbindungsteil (52), mit der Querschnittsfläche A1 als Referenz, die Querschnittsfläche des Fließwegs für Harz in dem Harzreservoirteil (5) in einem Bereich von 0,1 bis 2,0 %/mm abnimmt.

2. Formmaschine (10) nach Anspruch 1,
wobei ein Verhältnis einer Querschnittsfläche A3 in einer Längenzwischenposition zwischen der Position der Querschnittsfläche A1 und der Position der Querschnittsfläche A2 zu der Querschnittsfläche A1 40 bis 80 % beträgt.

3. Verfahren zur Herstellung eines geformten Gegenstandes aus einer thermoplastischen Harzzusammensetzung, umfassend einen Pelletierprozess zum Schmelzen und Formen zu einer Pelletform einer thermoplastischen Harzzusammensetzung, die ein erstes thermoplastisches Harz enthält, bei dem Harzpellets erhalten werden durch:
Zuführen der thermoplastischen Harzzusammensetzung zu einer Zufuhröffnung (1) einer Pelletformmaschine (10);
Extrudieren der durch die Zufuhröffnung (1) zugeführten thermoplastischen Harzzusammensetzung, während die thermoplastische Harzzusammensetzung in einem Schmelz- und Knetteil (2) geschmolzen wird;
Aufbewahren der in dem Schmelz- und Knetteil (2) geschmolzenen thermoplastischen Harzzusammensetzung in einem Harzreservoirteil (5), das eine sich in einer Extrudierrichtung der thermoplastischen Harzzusammensetzung verjüngende Form aufweist;
Ausgeben der in dem Harzreservoirteil (5) aufbewahrten thermoplastischen Harzzusammensetzung in einer Strangform aus einem Ausgabeteil (3); und
Zerkleinern der aus dem Ausgabeteil (3) ausgegebenen thermoplastischen Harzzusammensetzung in einer Strangform,
wobei die sich verjüngende Form so ausgebildet ist, dass ein Verhältnis (A2 zu A1) einer Querschnittsfläche A2 eines Fließwegs für Harz in einem zweiten Verbindungsteil (52) zwischen dem Harzreservoirteil (5) und dem Ausgabeteil (3) zu einer Querschnittsfläche A1 eines Fließwegs für Harz in einem ersten Verbindungsteil (51) zwischen dem Harzreservoirteil (5) und dem Schmelz- und Knetteil (2) 1 % bis 50 % beträgt, und in einer Länge L1 von dem ersten Verbindungsteil (51) zu dem zweiten Verbindungsteil (52), mit der Querschnittsfläche A1 als Referenz, die Querschnittsfläche des Fließwegs für Harz in dem Harzreservoirteil (5) in einem Bereich von 0,1 bis 2,0 %/mm abnimmt.

4. Herstellungsverfahren nach Anspruch 3, wobei die thermoplastische Harzzusammensetzung eine Komposit-Harzzusammensetzung ist, die ein erstes thermoplastisches Harz und eine anorganische Substanz und/oder eine von dem ersten thermoplastischen Harz verschiedene Polymerkomponente enthält.

5. Herstellungsverfahren nach Anspruch 4, umfassend ein Spritzgießprozess zum Formen der im Pelletierprozess pelletierten Harzpellets durch eine Spritzgießmaschine (10), wobei im Spritzgießprozess die Harzpellets mit einer Spritzgießgeschwindigkeit geformt werden, die geringer ist als eine Standard-Spritzgießgeschwindigkeit bezogen auf Pellets aus ungebrauchtem Harz durch die Spritzgießmaschine.

6. Herstellungsverfahren nach Anspruch 5,
wobei die Temperatur im Pelletierprozess die Standard-Spritzgießtemperatur +10 °C oder höher ist, bezogen auf die Pellets aus ungebrauchtem Harz;
wobei die Verweilzeit in dem Harzreservoirteil im Pelletierprozess 5 Sekunden bis 600 Sekunden beträgt,
wobei die Spritzgießgeschwindigkeit im Spritzgießprozess 30 % bis 70 % der Standard-Spritzgießgeschwindigkeit beträgt; und
wobei die Temperatur im Pelletierprozess innerhalb der Standard-Spritzgießtemperatur ±20 °C liegt, bezogen auf die Pellets aus ungebrauchtem Harz.

7. Herstellungsverfahren nach einem der Ansprüche 3 bis 6, wobei das erste thermoplastische Harz ein Harz auf Polyolefinbasis ist.

## Revendications

1. Machine de moulage (10) pour une composition de résine thermoplastique configurée pour faire fondre une composition de résine thermoplastique incluant une première résine thermoplastique et pour mouler la composition de résine thermoplastique en une forme de brin, la machine de moulage comprenant :
un orifice d'alimentation (1) configuré pour fournir la composition de résine thermoplastique ;
une partie de fusion et de malaxage (2) configurée pour faire fondre et malaxer la composition de résine thermoplastique fournie par l'orifice d'alimentation (1) ;
une partie de réservoir de résine (5) configurée pour retenir la composition de résine thermoplastique fondue et malaxée dans la partie de fusion et de malaxage (2) ; et
une partie d'évacuation (3) configurée pour évacuer sous une forme de brin la composition de résine thermoplastique retenue dans la partie de réservoir de résine (5) ;
dans laquelle la partie de réservoir de résine (5) présente une forme s'effilant de la partie de fusion et de malaxage (2) vers la partie d'évacuation (3) ; **caractérisée en ce que**
la forme effilée dans la partie de réservoir de résine (5) est configurée de sorte que :
un rapport (A2 à A1) d'une surface de section transversale A2 d'un trajet d'écoulement pour la résine dans une seconde partie de liaison (52) entre la partie de réservoir de résine (5) et la partie d'évacuation (3), à une surface de section transversale A1 d'un trajet d'écoulement pour la résine dans une première partie de liaison (51) entre la partie de réservoir de résine (5) et la partie de fusion et de malaxage (2), est de 1 % à 50 % ; et
dans une longueur L1 de la première partie de liaison (51) à la seconde partie de liaison (52), avec la surface de section transversale A1 comme référence, la surface de section transversale du trajet d'écoulement pour la résine dans la partie de réservoir de résine (5) diminue dans une plage de 0,1 à 2,0 %/mm.

2. Machine de moulage (10) selon la revendication 1,
dans laquelle un rapport d'une surface de section transversale A3 dans une position de longueur intermédiaire entre la position de la surface de section transversale A1 et la position de la surface de section transversale A2, à la surface de section transversale A1 est de 40 à 80 %.

3. Procédé de fabrication d'un article moulé d'une composition de résine thermoplastique, comprenant un processus de pelletisation pour la fusion et le moulage en une forme de pellet d'une composition de résine thermoplastique contenant une première résine thermoplastique, dans laquelle des pellets de résine sont obtenus par :
la fourniture de la composition de résine thermoplastique à un orifice d'alimentation (1) d'une machine de moulage de pellets (10) ;
l'extrusion de la composition de résine thermoplastique fournie à travers l'orifice d'alimentation (1), tout en faisant fondre la composition de résine thermoplastique dans une partie de fusion et de malaxage (2) ;
la retenue de la composition de résine thermoplastique fondue dans la partie de fusion et malaxage (2), dans une partie de réservoir de résine (5) présentant une forme s'effilant dans une direction d'extrusion de la composition de résine thermoplastique ;
l'évacuation de la composition de résine thermoplastique en une forme de brin retenue dans la partie de réservoir de résine (5) d'une partie d'évacuation (3) ; et
le broyage de la composition de résine thermoplastique en une forme de brin évacuée de la partie d'évacuation (3),
dans lequel la forme effilée est configurée de sorte qu'un rapport (A2 à A1) d'une surface de section transversale A2 d'un trajet d'écoulement pour la résine dans une seconde partie de liaison (52) entre la partie de réservoir de résine (5) et la partie d'évacuation (3), à une surface de section transversale A1 d'un trajet d'écoulement pour la résine dans une première partie de liaison (51) entre la partie de réservoir de résine (5) et la partie de fusion et de malaxage (2), est de 1 % à 50 %, et dans une longueur L1 de la première partie de liaison (51) à la seconde partie de liaison (52), avec la surface de section transversale A1 comme référence, la surface de section transversale du trajet d'écoulement pour la résine dans la partie de réservoir de résine (5) diminue dans une plage de 0,1 à 2,0 %/mm.

4. Procédé de fabrication selon la revendication 3, dans lequel la composition de résine thermoplastique est une composition de résine composite contenant une première résine thermoplastique et une substance inorganique et/ou un composant polymère différent de la première résine thermoplastique.

5. Procédé de fabrication selon la revendication 4, comprenant un processus de moulage par injection pour le moulage des pellets de résine pelletisés dans le processus de pelletisation par une machine de moulage par injection (10), dans lequel dans le processus de moulage par injection, les pellets de résine sont moulés à une vitesse de moulage par injection qui est inférieure à une vitesse de moulage par injection standard par rapport aux pellets de résine vierge par la machine de moulage par injection.

6. Procédé de fabrication selon la revendication 5,
dans lequel la température dans le processus de pelletisation est la température de moulage par injection standard +10 °C ou plus par rapport aux pellets de résine vierge ;
dans lequel le temps de rétention dans la partie de réservoir de résine dans le processus de pelletisation est de 5 secondes à 600 secondes,
dans lequel la vitesse de moulage par injection dans le processus de moulage par injection est de 30 % à 70 % de la vitesse de moulage par injection standard ; et
dans lequel la température dans le processus de moulage par injection se situe dans la plage de température de moulage par injection standard ±20 °C par rapport aux pellets de résine vierge.

7. Procédé de fabrication selon l'une quelconque des revendications 3 à 6, dans lequel la première résine thermoplastique est une résine à base de polyoléfine.
